# EUROPEAN PATENT APPLICATION

(11) **EP 3 112 927 A1**
(43) Date of publication of application: **04.01.2017**
(21) Application number: 15306060.3
(22) Date of filing: 30.06.2015
(51) Int. Cl.: G02C 11/00, G02C 7/02

(54) **A VISION MONITORING MODULE FIXED ON A SPECTACLE FRAME**

(71) Applicant: ESSILOR INTERNATIONAL (COMPAGNIE GENERALE D'OPTIQUE), 94220 Charenton-le-Pont (FR)
(72) Inventor: ROUSSEAU, Denis, 94227 CHARENTON-LE-PONT CEDEX (FR); LORE, Marie, 94227 CHARENTON-LE-PONT CEDEX (FR); BARRAU, Coralie, 94227 CHARENTON-LE-PONT CEDEX (FR); SWITAL, Marion, 94227 CHARENTON-LE-PONT CEDEX (FR); Gil, Paul, 94220 CHARENTON-LE-PONT (FR); SAHLER, Jean, 94227 CHARENTON-LE-PONT CEDEX (FR); BROUTIN, Guillaume, 94220 CHARENTON-LE-PONT (FR); COHEN TANNOUDJI, Denis, 94227 CHARENTON-LE-PONT CEDEX (FR)
(74) Representative: Cabinet Novitech

(57) **Abstract**

A vision monitoring module configured to be fixed, for example removably, on a spectacle frame, the module comprising:
- at least one sensor adapted to sense at least one parameter relating to the user of the spectacle frame that can be used to personalize an optical equipment for the user,
- at least one communication unit adapted to communicate data indicative of the at least one parameter sensed by the at least one sensor to a monitoring component.

## Description

### FIELD OF THE INVENTION

The invention relates to a vision monitoring module configured to be fixed, for example removably, on a spectacle frame to be worn by a user.

The invention further relates to a monitoring component adapted to determine personalization data of an optical equipment adapted for a user and to a method for determining a personalized optical equipment for a user.

### BACKGROUND OF THE INVENTION

Usually, an optical equipment user wishing to have an optical equipment goes to an eye care practitioner.

The eye care practitioner may carry out a number of tests to determine the most appropriate optical equipment for the user.

The tests carried out are more and more complex and are usually carried out in specific conditions and over short periods of times. Furthermore the tests only cover part of the very different visual situations the user may face. Therefore, the eyewear equipment settings correspond to the best average compromise between the different visual situations the user may face based on the visual test carried out at a given point in time.

Since the visual requirements of a user may change over time or depending on the visual situation, there is a need for a system and a method for providing information concerning the visual behavior of the user in all types of visual situations.

For example, an eye tracking device may be used to carry out tests to personalize the optical equipment for a user.

However, head mounted eye tracking devices are usually invasive and uncomfortable for the user. Furthermore, existing eye tracking devices are usually heavy, in particular much heavier than a typical pair of spectacle lenses. In some cases, special lenses are required (eg IR-reflective), and/or part of the field of view is obstructed by elements of the eye-tracking device.

The use of such eye tracking device is hardly consistent with having the user carry out his everyday life activities. Furthermore usually the eye trackers are mounted on specific frames that the user is to use during the tests.

Therefore, the data collected when using such eye trackers may not be as representative of the user activity as wished and the personalization of the optical equipment may not be as relevant as it could be.

Such issue is not limited to eye trackers but also arises for the different measuring devices used to carry out tests to determine the most appropriate optical equipment for the user

Therefore, there is a need for a solution allowing carrying out such tests to determine the most appropriate optical equipment for a user in real life conditions, for example using conventional optical equipment and preferably over a long period of time.

An aim of the present invention is to propose such solution.

### SUMMARY OF THE INVENTION

To this end, the invention proposes a vision monitoring module configured to be fixed, for example removably, on a spectacle frame, the module comprising:
- at least one sensor adapted to sense at least one parameter relating to the user of the spectacle frame that can be used to personalize an optical equipment for the user,
- at least one communication unit adapted to communicate data indicative of the at least one parameter sensed by the at least one sensor to a monitoring component.

The vision monitoring module according to the invention is configured to be fixed, for example removably, to a spectacle frame allowing measuring one or more parameters relating to the user or the user's environment while the user is wearing the spectacle frame and carrying out everyday life activity. Advantageously, the vision monitoring module of the invention allows providing more relevant data for the optical equipment provider, for example the optical lens provider, to personalize the optical equipment.

Furthermore, the vision monitoring module of the invention can provide feedback data to the user to alert the user to have him change behavior based on an external parameter measured by the monitoring module. In particular the collection of user and environment parameters in a global database can provide highly valuable information concerning the user's health.

According to further embodiments which can be considered alone or in combination:
- the module further comprises a remote power supply unit configured to provide power to the at least one sensor and communication unit; and/or
- the power supply unit comprises a battery connected to the rest of the module by electrical cables and configured to be worn by the user of the spectacle frame, for example around his neck; and/or
- the module further comprises fixing means configured to removably fix the module to any spectacle frame, for example to the side or to the lug of any conventional spectacle frame; and/or
- the module comprises at least one head movement sensor adapted to sense at least one head movement parameter relating to the head movement of the user of the spectacle frame; and/or
- the head movement sensor comprises an accelerometer and/or gyroscope and/or compass configured to sense the orientation and position and variation of orientation and position of the module; and/or
- the module comprises at least one visual behavior sensor adapted to sense at least one visual behavior parameter relating to the visual behavior of the user of the spectacle frame when the module is fixed to the spectacle frame worn by the user; and/or
- the visual behavior sensor comprises an eye tracker adapted to sense the gaze direction of the user of the spectacle frame when the module is fixed to the spectacle frame worn by the user; and/or
- the module comprises at least one environment sensor adapted to sense as part of the parameter relating to the user of the spectacle frame at least one environment parameter relating to the environment of the user of the spectacle frame; and/or
- the environment sensor comprises a light spectrum sensor adapted to sense light spectrum of the light received by the user of the spectacle frame; and/or
- the at least one sensor adapted to sense the at least one parameter relating to the user of the spectacle frame can be used to trigger an alert to the user.

The invention further relates to a smart frame incorporating a module according to the invention.

The invention also relates to a monitoring component adapted to determine personalization data of an optical equipment for a user, the monitoring component comprising:
- a communication unit configured to receive data indicative of the at least one parameter sensed by the at least one sensor of a vision monitoring module according to the invention, and
- a personalizing data unit configured to determine personalization data of an optical equipment adapted of the user based on the receive data, for example coupled to the activity of the user during the measurement of the data.

The invention also relates to a monitoring component adapted to generate feedback data, the monitoring component comprising:
- a communication unit configured to receive data indicative of the at least one parameter sensed by the at least one sensor of a vision monitoring module according to the invention, and
- a feedback data unit configured to determine feedback data to be sent to the user of the vision monitoring module, the feedback data being determined based on the received data.

Furthermore, the invention concerns a method for determining a personalized optical equipment for a user, the method comprising:
- a vision monitoring module providing step, during which a vision monitoring module according to the invention is removably fixed to a spectacle frame provided to the user,
- data collecting step, during which data relating to at least one parameter of the user of the spectacle frame is collected upon everyday life of the user, or during a particular task, like reading a book or newspaper
- a personalizing step, during which a personalized optical equipment is determined based at least on the collected data.

The invention further relates to a computer program product comprising one or more stored sequences of instructions that are accessible to a processor and which, when executed by the processor, causes the processor to carry out at least the data collecting step and the personalizing step of the method according to the invention.

The invention also relates to a computer-readable storage medium having a program recorded thereon; where the program makes the computer execute at least the data collecting step and the personalizing step of the method of the invention.

The invention further relates to a device comprising a processor adapted to store one or more sequence of instructions and to carry out at least the data collecting step and the personalizing step of the method according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general purpose systems may be used with programs in accordance with the teachings herein, or it may prove convenient to construct a more specialized apparatus to perform the desired method.

The desired structure for a variety of these systems will appear from the description below. In addition, embodiments of the present invention are not described with reference to any particular programming language. It will be appreciated that a variety of programming languages may be used to implement the teachings of the inventions as described herein.

### BRIEF DESCRIPTION OF THE DRAWINGS

Embodiments of the invention will now be described, by way of example only, and with reference to the following drawings in which:
- Figure 1 is a schematic representation of spectacle frame comprising a vision monitoring module according to the invention, and
- Figure 2 is flow chart of a method according to the invention.

### DETAILED DESCRIPTION OF PREFERRED EMBODIMENTS

Elements in the figures are illustrated for simplicity and clarity and have not necessarily been drawn to scale. For example, the dimensions of some of the elements in the figure may be exaggerated relative to other elements to help improve the understanding of the embodiments of the present invention.

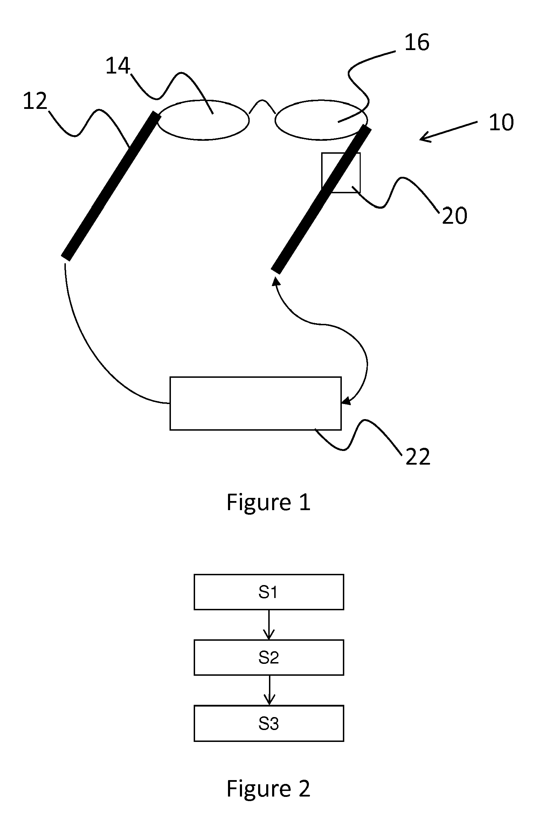

Figure 1 represents an example of optical equipment 10 comprising a spectacle frame 12 and optical lenses 14 and 16.

A vision monitoring module 20 is fixed on a side of the spectacle frame 12. The vision monitoring module 20 further comprises a remote power supply unit 22.

The vision monitoring module 20 is preferably made of very small electronic components so as to provide an overall module of about 3x5x20 mm and weigh not more than a few grams.

The vision monitoring module 20 comprise at least one sensor adapted to sense at least one parameter relating to the user of the spectacle frame. Such parameters may be used to personalize an optical equipment for the user and/or determine feedback data to the user.

According to an embodiment of the invention, the module may comprise at least one head movement sensor adapted to sense at least one head movement parameter relating to the head movement of the user of the spectacle frame. For example, the head movement sensor comprises an accelerometer and/or gyroscope and/or compass configured to sense the orientation and position and variation of orientation and position of the module.

According to an embodiment of the invention, the module may comprise at least one visual behavior sensor adapted to sense at least one visual behavior parameter relating to the visual behavior of the user of the spectacle frame when the module is fixed to the spectacle frame worn by the user.

The visual behavior sensor may comprise an eye tracker adapted to sense the gaze direction of the user of the spectacle frame when the module is fixed to the spectacle frame worn by the user.

The visual behavior sensor may comprise infra-red light sensors and emitters that can be used to measure eye blinking frequency. The visual behavior sensor may further comprise a camera looking at the user's eye to measure the pupil diameter or eye sight direction. A camera can be used in standard light or in IR light. For example, an IR LED emitter is used, and a camera is optically filtered to receive only the IR light, so as not to be perturbated by environment light.

The visual behavior sensor may further comprise a distance sensor configured to measure the gazing distance of the user. For example, infra-red or time of flight sensors can be used to provide gazing distance.

The different parameters relating to the visual behavior of the user of the spectacle frame may be coupled to an activity data relating to the activity carried out but the user.

For example, the reading distance may be of interest, thus measuring the gazing distance when the user is reading provides useful information for personalizing an optical equipment, in particular the optical design of an ophthalmic lens.

According to an embodiment of the invention, the module may comprise at least one environment sensor adapted to sense as part of the parameter relating to the user of the spectacle frame at least one environment parameter relating to the environment of the user of the spectacle frame.

The environment sensor may comprise a light spectrum sensor adapted to sense features of the light received by the user of the spectacle frame, for example the light spectrum and/or intensity. The light spectrum sensor may be split into different frequencies, like red, green, blue, UV and directed to different directions, for example up and/or down and/or right and/or left. Some particular blue light frequencies may be detected because of their effect on health.

The environment sensor may comprise sensor adapted to measure the temperature and/or the humidity and/or the pressure of the environment. The body temperature of the user may also be sensed.

The environment sensor may comprise a sensor adapted to measure environment pollution, for example sensors dedicated to specific toxic gasses and/or micro or nano particles.

The environment sensor may comprise a camera taking pictures or video of the environment of the user. Advantageously such pictures or video may be processed so as to determine information concerning the different activity of the everyday life of the user that can be correlated for example with a visual behavior of the user. Such correlation may be considered upon personalizing an optical equipment, such as the optical function of an ophthalmic lens.

According to an embodiment, the vision monitoring module may comprise at least one blood monitoring sensor, like infra-red LED and photodiode, adapted to measure oxymetry and/or heart rate or other blood related parameters.

According to an embodiment, the vision monitoring module may further comprise at least one skin sensor adapted to measure skin resistivity, moisture or inner muscle activity like eye movement or eyelid movement.

The vision monitoring module 20 further comprises at least one communication unit adapted to communicate data indicative of the parameter(s) sensed by the sensor(s) to a monitoring component.

The communication unit may be configured to communicate with the monitoring component either via a wire connection or a wireless connection using for example WIFI or Bluetooth® or Zigbee technology or any other wireless data transmission system.

The wire connection may be permanent, for example when the monitoring component is embedded either in the same case as the vision monitoring module or on the spectacle frame.

The wire connection may also be a USB or Ethernet type or any other wired communication system. The vision monitoring module may comprise a memory storing the measurements and the measurements may be communicated to the monitoring component using a cable connection.

As illustrated on figure 1, the vision monitoring module may comprise a remote power supply unit 22 configured to provide power to the at least one sensor and communication unit.

According to an embodiment of the invention, the power supply unit comprises a battery connected to the rest of the module by electrical cables and configured to be worn by the user of the spectacle frame, for example around his neck.

Typically, the wires may be embedded into a cable that can look like cords already used to attach spectacles on the neck of users, to avoid losing the spectacle.

The cables that connect the different modules allow different configurations for the system, depending of the weight of the modules. It allows a good equilibrium between left and right side of the frames, if the weight of the battery is on the neck and not on the frame itself, with a long activity time if the battery is big enough for several days. For example a battery with 800 mAh capacity has a weight of 15 g, that can be worn on the neck but would be not comfortable on the frame.

According to an embodiment, the remote power supply unit may further comprise sensors, such as a pulse sensor configured to measure the pulse of the user or movement sensors, like accelerometers and gyroscope. These sensors placed typically on the neck or chest will give accurate measurement of body position and movements, and can be useful also to determine accurately the head movement compared to body movements, if other movement sensors are placed on the head, by the means of differential measurements.

The vision monitoring module may further comprise fixing means configured to removably fix the module to any spectacle frame, for example to the side or to the lug of any conventional spectacle frame.

Conventional spectacle frame refers to spectacle frames intended to receive spectacle lenses comprising at least two sides intended to hold the spectacle on the user head and pads to have the spectacle rest on the user's nose.

According to a further embodiment, the vision monitoring module may be embedded in the spectacle frame with a rechargeable or cell battery.

The invention further relates to a monitoring component adapted to determine personalization data of an optical equipment for a user. The monitoring component comprises a communication unit and a personalizing data unit.

The communication unit is configured to receive data indicative of the parameter(s) sensed by the sensor(s) of a vision monitoring module according to the invention. The communication unit may be configured for wire communication or wireless communication.

The personalizing data unit is configured to determine personalization data of an optical equipment, for example the optical function of the ophthalmic lens, adapted of the user based on the receive data. The received data may be coupled to the activity carried out by the user during the measurement of the data.

In the sense of the invention, an optical function corresponds to a function providing for each gaze direction the effect of an optical lens on the light ray passing through the optical lens.

The optical function may comprise dioptric function, light absorption, polarizing capability, reinforcement of contrast capacity, etc...

The dioptric function corresponds to the optical lens power (mean power, astigmatism etc... ) as a function of the gaze direction

As illustrated on figure 2, the invention further relates to a method for determining a personalized optical equipment for a user.

The method comprises at least:
- a vision monitoring module providing step S1,
- data collecting step, and
- a personalizing step

During the vision monitoring module providing step S1 a vision monitoring module according to the invention is removably fixed to a spectacle frame provided to the user.

During the data collecting step S2 data relating to at least one parameter of the user of the spectacle frame is collected upon everyday life of the user, or during a particular task, like reading a book or newspaper. The parameter of the user may for example comprise the user's head movement and/or the visual behavior of the user and/or data concerning the environment of the user.

During the personalizing step S3 a personalized optical equipment, for example a personalized ophthalmic lens, is determined based at least on the collected data.

Advantageously, the method of the invention uses accurate and highly relevant data to personalize the optical equipment so as to provide to the user the most adapted optical equipment.

The invention further relates to a monitoring component adapted to generate feedback data for the user and/or a third party. The monitoring component comprises a communication unit and a feedback data unit.

The communication unit is configured to receive data indicative of the parameter(s) sensed by the sensor(s) of a vision monitoring module according to the invention. The communication unit may be configured for wire communication or wireless communication.

The feedback data unit is configured to determine feedback data to be sent to the user of the vision monitoring module, the feedback data being determined based on the received data.

The received data may be coupled to the activity carried out by the user during the measurement of the data.

The feedback data unit may be configured to generate a visual feedback to the user, for example by applying an image processing on scene images received from a scene camera and sent to the user or by a visual signal, that can be a small display placed near to the eye, and/or a set of color LED. Feedback can also be an electrochromic function, or any other optical function applied on the glass.

Feedback data can also be sent on a remote device, for example a smartphone. In this case the feedback data can be a text message, an image or a phone vibration or a combination of these.

The feedback component is arranged to provide an audio feedback to the user, for example using a speaker or an in-ear headphone.
The feedback component may also be a vibrating element placed on the frame.

Typically, the feedback component may comprise an analysis component, hardware or software, configured to analyze the parameter measured by the vision monitoring component. Based on the analysis provided by the analysis component, the feedback component may determine feedback data to be sent the user, for example to inform the user that he should either change or maintain his current behavior considering all the parameters analyzed.

The analysis component can be part of the monitoring component or in a distant entity.

The distant entity can include different computing objects such as personal digital assistants, audio/video devices, mobile phones, MPEG-1 Audio Layer 3 (MP3) players, personal computers, laptops, tablets, bluetooth headset, watch, wristband, etc...

The analysis component may also access to a distant data base or lookup table that contains more information concerning the user or a global information of the environment, like pollution level, risk of sun exposure, etc..

According to an aspect of the invention, the monitoring module may be adapted to specific activity of the user. For example, the user may select a specific monitoring module when working on a screen and a different monitoring module when walking in the street or driving. Indeed, the parameters of the user to be measured and the requirements of the optical equipment may be different for different activities. The monitoring module may also adapt itself to the wearer activity, and change the selection and the frequency of sensor measurements depending of the activity that is automatically detected. For example outdoor activity can be detected by UV and light and/or movement detection , reading activity can be detected by head movement and/or proximity sensors.

According to a further aspect of the invention, the monitoring module may be personalized or customized for a given user. Typically, the monitoring module comprises an identification interface allowing identifying the user and upon identification the monitoring module may be adapted for the identified user, for example via a lookup table associating users and specific configuration of the monitoring module.

According to an aspect of the invention, the monitoring module may provide information that may be used for health protection purposes. For example, the monitoring module may provide information concerning the correct use of chronocut eyeglasses, in particular there use during the good period of time.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A vision monitoring module configured to be fixed on a spectacle frame, the module comprising:
- at least one sensor adapted to sense at least one parameter relating to the user of the spectacle frame that can be used to personalize an optical equipment for the user,
- at least one communication unit adapted to communicate data indicative of the at least one parameter sensed by the at least one sensor to a monitoring component.

2. The module according to claim 1, wherein the module further comprises a remote power supply unit configured to provide power to the at least one sensor and communication unit.

3. The module according to the preceding claim, wherein the power supply unit comprises a battery connected to the rest of the module by electrical cables and configured to be worn by the user of the spectacle frame, for example around his neck.

4. The module according to any of the preceding claims, wherein the module further comprises fixing means configured to removably fix the module to any spectacle frame, for example to the side or to the lug of any conventional spectacle frame.

5. The module according to any of the preceding claims, wherein the module comprises at least one head movement sensor adapted to sense at least one head movement parameter relating to the head movement of the user of the spectacle frame.

6. The module according to the preceding claim, wherein the head movement sensor comprises an accelerometer and/or gyroscope and/or compass configured to sense the orientation and position and variation of orientation and position of the module.

7. The module according to any of the preceding claims, wherein the module comprises at least one visual behavior sensor adapted to sense at least one visual behavior parameter relating to the visual behavior of the user of the spectacle frame when the module is fixed to the spectacle frame worn by the user.

8. The module according to the preceding claim, wherein the visual behavior sensor comprises an eye tracker adapted to sense the gaze direction of the user of the spectacle frame when the module is fixed to the spectacle frame worn by the user.

9. The module according to any of the preceding claims, wherein the module comprises at least one environment sensor adapted to sense as part of the parameter relating to the user of the spectacle frame at least one environment parameter relating to the environment of the user of the spectacle frame.

10. The module according to the preceding claim, wherein the environment sensor comprises a light spectrum sensor adapted to sense light spectrum of the light received by the user of the spectacle frame.

11. The module according to claim 1 wherein the at least one sensor adapted to sense the at least one parameter relating to the user of the spectacle frame can be used to trigger an alert to the user.

12. A smart frame incorporating a module according to any of the proceeding claims.

13. A monitoring component adapted to determine personalization data of an optical equipment for a user, the monitoring component comprising:
- a communication unit configured to receive data indicative of the at least one parameter sensed by the at least one sensor of a vision monitoring module according to any of claims 1 to 11, and
- a personalizing data unit configured to determine personalization data of an optical equipment adapted of the user based on the received data.

14. A monitoring component adapted to generate feedback data, the monitoring component comprising:
- a communication unit configured to receive data indicative of the at least one parameter sensed by the at least one sensor of a vision monitoring module according to any of claims 1 to 11, and
- a feedback data unit configured to determine feedback data to be sent to the user of the vision monitoring module, the feedback data being determined based on the received data.

15. Method for determining a personalized optical equipment for a user, the method comprising:
- a vision monitoring module providing step, during which a vision monitoring module according to any of claims 1 to 10 is removably fixed to a spectacle frame provided to the user,
- data collecting step, during which data relating to at least one parameter of the user of the spectacle frame is collected upon everyday life of the user, or during a particular task, like reading a book or newspaper
- a personalizing step during which a personalized optical equipment is determined based at least on the collected data.
